(19) Europäisches Patentamt
European Patent Office
Office européen des brevets

(11) **EP 4 593 192 A1**

(12) **EUROPEAN PATENT APPLICATION**

(43) Date of publication:
**30.07.2025 Bulletin 2025/31**

(21) Application number: **24223640.4**

(22) Date of filing: **30.12.2024**

(51) International Patent Classification (IPC):
**H01P 5/18** (2006.01)

(52) Cooperative Patent Classification (CPC):
**H01P 5/18**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.01.2024 TW 113103380**

(71) Applicant: **Strong-Wave Radio Technology Inc.
Taoyuan City (TW)**

(72) Inventors:
• **Chou, Hsi Tseng**
**Taoyuan City (TW)**
• **Yan, Zhi Da**
**Taoyuan City (TW)**
• **Panigrahi, Siddhartha**
**Taoyuan City (TW)**

(74) Representative: **Bandpay & Greuter
11, rue Christophe Colomb
75008 Paris (FR)**

(54) **ADJUSTABLE POWER DIVIDER CIRCUIT CAPABLE OF IMPLEMENTING ARBITRARY POLARIZATION MODE**

(57)    An adjustable power divider circuit capable of implementing an arbitrary polarization mode is disposed between a radio-frequency (RF) circuit and at least one antenna element, and includes an input signal portion, at least two signal control portions, a processing unit, and at least one orthogonal coupler. The input signal portion can convert the RF circuit's RF signal(s) into input signals and send the input signals to the signal control portions. The signal control portions can convert the input signals into control signals based on the processing unit's instructions and send the control signals to the orthogonal coupler. The orthogonal coupler can generate two output signals having a 90-degree phase difference therebetween, and send the output signals to the antenna element. Accordingly, based on actual product needs, the adjustable power divider circuit can make the antenna element enter a polarization mode that is linear in an arbitrary direction, circular, elliptical, etc.

**EP 4 593 192 A1**

**Description**

**CROSS-REFERENCE TO RELATED PATENT APPLICATION**

This non-provisional application claims priority to and the benefit of Taiwan Patent Application No. 113103380, filed January 29, 2024 in Taiwan. The entire content of the above identified application is incorporated herein by reference.

**FIELD**

The present disclosure is related to an adjustable power divider circuit applicable to an antenna system, and more particularly to an adjustable power divider circuit capable of implementing an arbitrary polarization mode with the same circuit.

**BACKGROUND**

With the development of non-terrestrial networks (NTNs), satellite communications have taken on an important role in the global communications architecture. Currently, satellite constellations in low Earth orbits (LEOs), medium Earth orbits (MEOs), and geostationary Earth orbits (GEOs) provide support for a diversity of communication needs, with each satellite having its own radio-frequency (RF) properties and operating in a specified frequency band. The design of a satellite communications effective payload antenna has to meet different radiation requirements, from linear polarization (LP) to circular polarization (CP) for example. In certain scenarios, with a view to increasing the capacity and efficiency of a communications system, a dual polarization technique with proper polarization isolation is called for in order to enable transmission that features orthogonal polarization and two communication channels.

Generally speaking, LP means that the electrical field of an electromagnetic wave varies linearly in a certain plane, wherein the plane may be vertical, horizontal, or at any angle between a vertical plane and a horizontal plane. LP is particularly useful in a static telecommunications link, e.g., from ground to ground or for communication with a specific satellite, and this is because the required antenna system is relatively simple in design, has high performance, and provides a wide frequency band. In scenarios where mobile communications are desired, however, LP may be disadvantaged by its sensitivity to satellite movements.

By contrast, CP is crucial to satellite communications thanks to its properties, in particular the property that the spiral propagation mode of the electric field reduces sensitivity to multipath interference and to changes in satellite directions. CP may be left-handed CP (LHCP) or right-handed CP (RHCP) and is implemented with two perpendicular LP elements whose phase difference is 90 degrees and which jointly produce the effect of circularly polarized radiation. In fact, CP has become the top choice in satellite communications and global positioning systems. Elliptical polarization is an intermediate form between CP and LP and has an electric field whose trace is neither completely linear nor completely circular but elliptical. Elliptical polarization is especially advantageous where there are irregular reflections and refractions, e.g., in a complicated environment such as an urban or mountainous area.

When the gain requirements, as well as coexistence, of the various polarization modes of satellite communications are taken into consideration, the complexity in design of ground-station or user-end antennas is compounded. Previous design methods mostly involve making individual antenna designs based on the requirements of each satellite. This design methodology, however, incurs a high cost and lacks the flexibility of adapting to dynamic polarization requirements. For example, an antenna for communicating with a GEO satellite, whose position relative to a ground station is stationary, has a relatively simple and straightforward design and, once installed, can be used for a long time without subsequent adjustment. A system for communicating with a LEO or MEO satellite, on the other hand, faces more challenges as it requires a flexible antenna design that allows selection of orthogonal CP. This requirement has spurred the development of dual linear polarization antennas and dual CP antennas, especially the former, which can provide CP through phase adjustment and are therefore highly suitable for use in a planar phased array antenna.

Despite the numerous revolutions in modern antenna design, however, one common problem remains: polarization cannot be adjusted dynamically in order to meet the requirements of different satellites. From the perspective of the budget of telecommunications links, the antenna properties required of GEO satellites should be adequate for LEO and MEO satellites, and yet the difference in polarization constitutes a major challenge. It is therefore required that an antenna for satellite communications have higher flexibility in polarization alignment so as to reduce the communication loss caused by a mismatch in polarization. In view of such, one of the issues addressed in the present disclosure is to effectively resolve such problems.

**SUMMARY**

To stand out in a competitive market, based on years of practical experience in professional antenna design and the research sprit striving for excellence, and as a result of longtime research and experiments, an adjustable power divider circuit capable of implementing an arbitrary polarization mode is provided in the present disclosure, so as to provide users with better use experience.

Certain aspects of the present disclosure are directed to an adjustable power divider circuit configured to implement an arbitrary polarization mode, disposed between an RF circuit and at least one antenna element, and includes an input signal portion, at least two signal control portions, a processing unit and at least one orthogonal coupler. The input signal portion is electrically connected to the RF circuit and configured to convert each of at least one RF signal transmitted by the RF circuit into a plurality of corresponding input signals. The at least two signal control portions are connected to the input signal portion and include a first signal control portion and a second signal control portion. The first signal control portion is configured to receive a first one of the input signals and convert the first input signal into a corresponding first control signal. The second signal control portion is configured to receive a second one of the input signals and convert the second input signal into a corresponding second control signal. The processing unit is electrically connected to the signal control portions and configured to transmit a first processing instruction to the first signal control portion and a second processing instruction to the second signal control portion so that the first signal control portion converts the first input signal into the corresponding first control signal according to the first processing instruction and the second signal control portion converts the second input signal into the corresponding second control signal according to the second processing instruction. The at least one orthogonal coupler includes a first orthogonal coupler configured to convert the first control signal into a first output signal and the second control signal into a second output signal, and having: a first input port configured to receive the first control signal transmitted from the first signal control portion; a second input port configured to receive the second control signal transmitted from the second signal control portion; a first output port configured to output the first output signal; and a second output port configured to output the second output signal. The first output signal has a 90-degree phase difference from the second output signal. The adjustable power divider circuit is configured to make each of at least one antenna element that is connected to the first output port or the second output port to enter a predetermined polarization mode according to the first output signal or the second output signal. Accordingly, based on actual product needs, the adjustable power divider circuit according to the present disclosure can make the antenna element enter a polarization mode that is linear in an arbitrary direction, circular, elliptical, etc., without needing to provide each antenna system with an independent polarization circuit suiting the properties of the antenna system, which greatly increases the convenience in use.

In certain embodiments, the first signal control portion includes a first switch unit, the second signal control portion includes a second switch unit and a phase shifter disposed between the second switch unit and the second input port, the first switch unit is configured to enter an ON or OFF state according to a processing instruction of the processing unit, and the second switch unit is configured to enter an ON or OFF state according to a processing instruction of the processing unit.

In certain embodiments, the first signal control portion includes a first phase shifter and a first power amplifier disposed between the first phase shifter and the first input port, and the second signal control portion includes a second phase shifter and a second power amplifier disposed between the second phase shifter and the second input port.

In certain embodiments, the first signal control portion includes a first phase shifter and a first power amplifier disposed between the first phase shifter and the first input port, the second signal control portion includes a second power amplifier, and a second phase shifter is disposed between the input signal portion and the first and second signal control portions.

In certain embodiments, the adjustable power divider circuit further includes at least one signal excitation portion, and the signal excitation portion is electrically connected to at least one of the first and second output ports and configured to receive at least one of the first and second output signals.

In certain embodiments, the adjustable power divider circuit has only one signal excitation portion configured to adjust a phase of the first output signal or the second output signal to be $+\pi/2, -\pi/2$, or 0.

In certain embodiments, the adjustable power divider circuit has a first signal excitation portion electrically connected to the first output port and configured to adjust a phase of the first output signal to be $\pi/2$ or 0, and a second signal excitation portion electrically connected to the second output port and configured to adjust a phase of the second output signal to be $\pi/2$ or 0.

In certain embodiments, the signal excitation portion includes a phase retarder having a plurality of conductive wires varying in shape and length. The phase retarder is configured to receive a processing instruction from the processing unit, bring one of the conductive wires into electrical connection with a corresponding one of the first and second output ports according to the processing instruction, and adjust a phase of a corresponding one of the first and second output signals that passes through the phase retarder.

In certain embodiments, the signal excitation portion includes a phase retarder having a conductive wire. The phase retarder is configured to receive a processing instruction from the processing unit, change a position at which the conductive wire is connected to a corresponding one of the first and second output ports according to the processing instruction so as to change a path length between the corresponding output port and an antenna element corresponding to the output port, and adjust a phase of a corresponding one of the first and second output signals that passes through the phase retarder according to the path length change.

In certain embodiments, the adjustable power divider circuit further includes a third signal control portion, a fourth signal control portion, and a second orthogonal coupler having a first input port, a second input port, a first output port and a second output port. The third signal control portion is electrically connected to the first input port of the second orthogonal coupler, and the fourth signal control portion is electrically connected to the second input port of the second orthogonal coupler. One of the first and second output ports of the first orthogonal coupler and one of the first and second output ports of the second orthogonal coupler jointly form a first output portion, and the other one of the first and second output ports of the first orthogonal coupler and the other one of the first and second output ports of the second orthogonal coupler jointly form a second output portion. The adjustable power divider circuit is configured to make a first antenna element connected to the first output portion to enter a first predetermined polarization mode according to at least one of one of the first and second output signals of the first orthogonal coupler and one of a first output signal and a second output signal of the second orthogonal coupler that is transmitted to the first antenna element, and to make a second antenna element connected to the second output portion to enter a second predetermined polarization mode according to at least one of the other one of the first and second output signals of the first orthogonal coupler and the other one of the first and second output signals of the second orthogonal coupler that is transmitted to the second antenna element.

In certain embodiments, the adjustable power divider circuit further includes a third signal control portion, a fourth signal control portion, and a second orthogonal coupler having a first input port, a second input port, a first output port and a second output port. The third signal control portion is electrically connected to the first input port of the second orthogonal coupler, and the fourth signal control portion is electrically connected to the second input port of the second orthogonal coupler. The first and second output ports of the first orthogonal coupler are electrically connected to two feed ends of a first dual polarization antenna, respectively, and the first and second output ports of the second orthogonal coupler are electrically connected to two feed ends of a second dual polarization antenna, respectively. The adjustable power divider circuit is configured to make the first dual polarization antenna to enter a first predetermined polarization mode according to at least one of the first and second output signals of the first orthogonal coupler that is transmitted to the first dual polarization antenna, and to make the second dual polarization antenna to enter a second predetermined polarization mode according to at least one of a first output signal and a second output signal of the second orthogonal coupler that is transmitted to the second dual polarization antenna.

In certain embodiments, the adjustable power divider circuit further includes a third signal control portion, a fourth signal control portion, and a second orthogonal coupler having a first input port, a second input port, a first output port and a second output port. The third signal control portion is electrically connected to the first input port of the second orthogonal coupler, and the fourth signal control portion is electrically connected to the second input port of the second orthogonal coupler. The first output ports and second output ports of the first and second orthogonal couplers are electrically connected to four feed ends of the sane antenna element, respectively. The adjustable power divider circuit is configured to make the antenna element to enter a predetermined polarization mode according to at least one of the first and second output signals of the first orthogonal coupler and a first output signal and a second output signal of the second orthogonal coupler that is transmitted to the antenna element.

In certain embodiments, the adjustable power divider circuit further includes an annular adjusting device disposed between the signal control portions and the at least one orthogonal coupler, and the annular adjusting device is configured to adjust RF transmission paths of the control signals or cause a phase delay.

In certain embodiments, the annular adjusting device is an annular selective bridging device having a plurality of conductive wire path portions, and each of the conductive wire path portions forms a different RF path between the signal control portions and the at least one orthogonal coupler.

In certain embodiments, the annular adjusting device is an annular coupler having a plurality of ports and configured to transmit the control signals from one of the ports to another one of the ports and from the another one of the ports to a corresponding input port of the at least one orthogonal coupler to cause a phase delay in at least one of the control signals.

These and other aspects of the present disclosure will become apparent from the following description of the embodiment taken in conjunction with the following drawings and their captions, although variations and modifications therein may be affected without departing from the spirit and scope of the novel concepts of the disclosure.

BRIEF DESCRIPTION OF THE DRAWINGS

The present disclosure will become more fully understood from the following detailed description and accompanying drawings.

FIG. 1A is a schematic structural diagram showing the RF signal(s) being transmitted to a dual LP antenna according to certain embodiments of the present disclosure.

FIG. 1B is a schematic coordinate diagram showing the angle of the polarization of the RF signal(s) according to certain embodiments of the present disclosure.

FIG. 2 is a schematic diagram of a circuit structure according to certain embodiments of the present disclosure.

FIG. 3A is a schematic diagram of another circuit structure according to certain embodiments of the present disclosure.

FIG. 3B is a schematic diagram of a phase retarder being in a connected state according to certain embodiments of the present disclosure.

FIG. 3C is a schematic diagram of a phase retarder being in another connected state according to certain embodiments of the present disclosure.

FIG. 3D is a schematic diagram of a phase retarder of another type being in a connected state according to certain embodiments of the present disclosure.

FIG. 3E is a schematic diagram of a phase retarder of another type being in another connected state according to certain embodiments of the present disclosure.

FIG. 4 is a schematic diagram of a circuit structure according to certain embodiments of the present disclosure.

FIG. 5 is a schematic diagram of a circuit structure connected to two antenna elements according to certain embodiments of the present disclosure.

FIG. 6A is a schematic diagram of a circuit structure according to certain embodiments of the present disclosure.

FIG. 6B is a schematic diagram of another circuit structure according to certain embodiments of the present disclosure.

FIG. 7 is a schematic diagram of a circuit structure according to certain embodiments of the present disclosure.

FIG. 8A is a schematic diagram of a circuit structure according to certain embodiments of the present disclosure.

FIG. 8B is a schematic diagram of a circuit structure according to certain embodiments of the present disclosure.

FIG. 9A is a schematic circuit structural diagram of an adjustable power divider circuit provided with an annular selective bridging device according to certain embodiments of the present disclosure.

FIG. 9B is a schematic circuit structural diagram of an adjustable power divider circuit provided with an annular coupler according to certain embodiments of the present disclosure.

## DETAILED DESCRIPTION

The present disclosure is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a", "an", and "the" includes plural reference, and the term "and/or" includes any and all combinations of one or more of the associated listed items. Titles or subtitles can be used herein for the convenience of a reader, which shall have no influence on the scope of the present disclosure.

The accompanying drawings are schematic and may not have been drawn to scale. The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present disclosure or of any exemplified term. Likewise, the present disclosure is not limited to various embodiments given herein. Numbering terms such as "first", "second" or "third" can be used to describe various components, materials, objects, or the like, which are for distinguishing one component/material/object from another one only, and are not intended to, nor should be construed to impose any substantive limitations on the components, materials, objects, or the like. Directional terms (e.g., "front", "rear", "left", "right", "upper/top" and/or "lower/bottom") are explanatory only and are not intended to be restrictive of the scope of the present disclosure.

As used herein, the term "substantially" or "approximately" refers to, for example, a value, or an average of values, in an acceptable deviation range of a particular value recognized or decided by a person of ordinary skill in the art, taking into account any specific quantity of errors related to the measurement of the value that may be resulted from limitations of a measurement system or device. For example, "substantially" may indicate that the value is within, for example, $\pm 5\%$, $\pm 3\%$, $\pm 1\%$, $\pm 0.5\%$ or $\pm 0.1\%$, or one or more standard deviations, of the particular value.

The term "connected" or "electrically connected" as may be referred to in the present disclosure includes connection configurations such as direct connection between two components, indirection connection between two components with at least one component being provided between the two components, etc.

The present disclosure provides an adjustable power divider circuit capable of implementing an arbitrary polarization mode and disposed between an RF circuit (i.e., a source end for generating RF signals) and at least one antenna element. The adjustable power divider circuit can collect all radiation power from its inputs and divide an input signal from the RF circuit to redistribute the radiation power among the antenna element(s) either evenly or in a specific ratio and provide the divided signals with the desired phase difference so that the at least one antenna element can enter one of various polarization modes, e.g., a LP mode, a CP mode, an elliptical polarization mode, etc. according to practical needs, wherein the LP mode includes various modes such as a single horizontal polarization mode, a single vertical polarization mode, an arbitrary single linear polarization mode, a dual LP mode, and so on, and wherein the CP mode includes various modes such as a LHCP mode, a RHCP mode, and so on. Thus, based on practical needs (e.g., to communicate with a LEO satellite, a MEO satellite, or a GEO satellite), the adjustable power divider circuit can bring the at least one antenna element into the corresponding polarization mode.

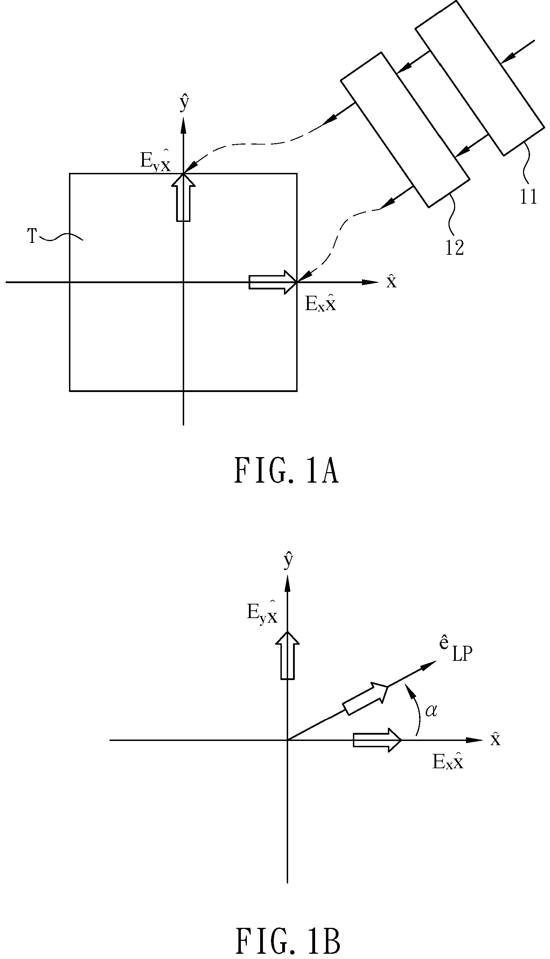

An antenna element for use in satellite communications can work in a LP mode and a CP mode. Take the configuration of a dual LP antenna for example. Referring to the coordinate system in FIG. 1A and FIG. 1B, an input signal from an RF circuit (not shown) enters a power divider 11 and is subsequently adjusted in phase by a phase shifter 12 in order to bring an antenna element T into the predetermined desired polarization mode. In

LP, the electric field vector $\hat{e}_{LP}$ can be expressed by equation (1):

$$\hat{e}_{LP} = \cos\alpha\hat{x} + \sin\alpha\hat{y} \ \ldots\ldots\ldots(1).$$

In RHCP, the electric field vector $\hat{e}_{RHCP}$ can be expressed by equation (2), whereas in LHCP, the electric field vector $\hat{e}_{LHCP}$ can be expressed by equation (3):

$$\hat{e}_{RHCP} = \frac{1}{\sqrt{2}}(\hat{x} + j\hat{y}) \ \ldots\ldots\ldots(2)$$

$$\hat{e}_{LHCP} = \frac{1}{\sqrt{2}}(j\hat{x} + \hat{y}) \ \ldots\ldots\ldots(3).$$

The foregoing equations are defined for the principal broadside direction of an antenna, which direction is defined herein as $\theta = 0$ degree. In FIG. 1, $E_y\hat{x}$ represents the electric field in the $\hat{y}$ direction as is excited by the $\hat{x}$ component, and $E_x\hat{x}$ represents the electric field in the $\hat{x}$ direction as is excited by the $\hat{x}$ component. Under this condition, $\alpha$ is the angle of the polarization direction with respect to the $\hat{x}$ axis. Therefore, by adjusting the value of $\alpha$, the polarization direction can be rotated about the principal broadside direction to carry out polarization steering as desired. Further, j in equations (2) and (3) is the imaginary unit and is used to indicate a 90-degree phase difference. That is to say, the RHCP mode and the LHCP mode form mirror images in space that are perpendicular to each other.

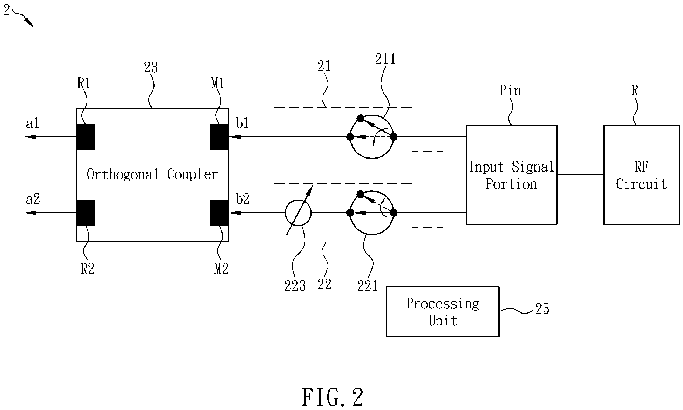

Based on the conceptual architecture stated above, and in order to use a single circuit architecture to provide various polarization modes, in certain embodiments, an adjustable power divider circuit 2 includes an input signal portion Pin, two signal control portions 21 and 22, an orthogonal coupler 23, and a processing unit 25, as shown in FIG. 2. The input signal portion Pin is electrically connected to an RF circuit R and is configured to convert each of at least one RF signal transmitted by the RF circuit R into a plurality of corresponding input signals and transmit the input signals to the signal control portions 21 and 22, respectively. In certain embodiments, the input signal portion Pin can be a Wilkinson power divider with a power amplifier to input it, or a power divider of another type, and can convert each of the at least one RF signal into a plurality of input signals of even powers, or a plurality of input signals whose powers are in a specific ratio. However, the present disclosure is not limited thereto. Also, the radiation power can either be supplied by a power amplifier before the Wilkinson power divider junction, or be supplied by several power amplifiers, each on one of the branches of the Wilkinson power divider after the Wilkinson power divider junction.

With continued reference to FIG. 2, each of the signal control portions 21 and 22 receives one of the input signals from the input signal portion Pin and converts the input signal received into the corresponding control signal. The control signal can be the same as the input signal, can have a phase different from the input signal, etc. The signal control portion 21 includes a switch unit 211, and the signal control portion 22 includes a switch unit 221 and a phase shifter 223. Each of the switch units 211 and 221 receives the corresponding input signal transmitted by the input signal portion Pin, and the switch unit 221 further transmits the input signal received to the phase shifter 223 in order to carry out the desired phase adjustment. The orthogonal coupler 23 has two input ports M1 and M2 and two output ports R1 and R2. The input port M1 receives the control signal transmitted by the switch unit 211, and the input port M2 receives the control signal transmitted by the phase shifter 223. Each control signal is processed by the orthogonal coupler 23 into the corresponding output signal, and each output signal is output to the corresponding antenna element (for example, but not limited thereto, in the configuration of the antenna element T shown in FIG. 1A) through the output port R1 or R2. The output signals output by the output ports R1 and R2 can have a substantially 90-degree phase difference from each other. The orthogonal coupler 23 can include a 90-degree hybrid directional coupler that is a single microwave component, or an equivalent circuit structure that has the same functions. That is, the orthogonal coupler 23 can vary in configuration, as long as its circuit architecture is sufficient to produce a 90-degree phase difference between the two output ports R1 and R2. The orthogonal coupler 23 can be flexibly used in various RF applications and adapt to different technical requirements and implementation methods.

As shown in FIG. 2, the processing unit 25 is electrically connected at least to the two signal control portions 21 and 22 and can generate a processing instruction and transmit the processing instruction to each of the signal control portions 21 and 22, in order for each of the switch units 211 and 221 to enter a predetermined ON or OFF state, thereby adjusting the RF paths between the input signal portion Pin and the orthogonal coupler 23. The processing unit 25 can also make the phase shifter 223 change the phase of the corresponding input signal, thereby converting this input signal into the corresponding control signal. Depending on the types of the electronic elements to be controlled, the processing instruction(s) can be an analog signal (e.g., a voltage or current) or digital signal for making each electronic element in the signal control portions 21 and 22 perform the intended operation. In certain embodiments, based on the practical product needs, the processing unit 25 can also be electrically connected to other electronic component(s) in the adjustable power divider circuit 2, for example, the input signal portion Pin, so as to control the power of the input signals generated by the input signal portion Pin (e.g., generating input control signals whose power ratios are different).

Referring to FIG. 2, in certain embodiments, the design principles are based on the fast Fourier transform (FFT) mechanism. The output signals a1 and a2 output by the output ports R1 and R2, respectively, serve as excitation weights for the antenna element (e.g., a dual polarization antenna), and the control signals b1 and b2 received by the input ports M1 and M2, respectively, are control parameters for the desired polarization mode. Matrix equations (4) and (5) show the conversion relationships between the control parameters (i.e., the control signals b1 and b2) and the excitation weights (i.e., the output signals a1 and a2):

$$\begin{bmatrix} a1 \\ a2 \end{bmatrix} = \frac{1}{\sqrt{2}} \begin{bmatrix} 1 & j \\ j & 1 \end{bmatrix} \begin{bmatrix} b1 \\ b2 \end{bmatrix} \quad \text{.........(4)}$$

$$\begin{bmatrix} b1 \\ b2 \end{bmatrix} = \sqrt{2} \begin{bmatrix} 1 & j \\ j & 1 \end{bmatrix}^{-1} \begin{bmatrix} a1 \\ a2 \end{bmatrix} = \frac{1}{\sqrt{2}} \begin{bmatrix} 1 & -j \\ -j & 1 \end{bmatrix} \begin{bmatrix} a1 \\ a2 \end{bmatrix} \quad \text{.........(5).}$$

For LP, equation (1) can be substituted into equation (5) to produce equations (6):

$$\begin{cases} b1 = \frac{1}{\sqrt{2}} (\cos \alpha - j \sin \alpha) = \frac{1}{\sqrt{2}} e^{-j\alpha} \\ b2 = \frac{1}{\sqrt{2}} (-j \cos \alpha + \sin \alpha) = \frac{-j}{\sqrt{2}} e^{j\alpha} \end{cases} \quad \text{.........(6).}$$

For CP, equation (2) can be substituted into equation (5) to produce equations (7):

$$\begin{bmatrix} b1 \\ b2 \end{bmatrix}_{RHCP} = \begin{bmatrix} 1 \\ 0 \end{bmatrix}; \begin{bmatrix} b1 \\ b2 \end{bmatrix}_{LHCP} = \begin{bmatrix} 0 \\ 1 \end{bmatrix} \quad \text{.........(7).}$$

In order to bring the antennas into an arbitrary polarization mode, it is necessary to generate the phases (i.e., $\pm \alpha$ in equations (6)) required for the control parameters (i.e., the control signals b1 and b2) and a constant's phase change $-\pi/2$. As a fixed phase change will not change the polarization mode of the radiated electromagnetic wave, equations (6) can be rewritten as equation (8) with the assumption that $(a1, a2) = e^{j\alpha}(\cos \alpha, \sin \alpha)$:

$$(b1, b2) = \frac{1}{\sqrt{2}} \left( 1, e^{j\left(2\alpha - \frac{\pi}{2}\right)} \right) \quad \text{.........(8).}$$

Thus, the adjustable power divider circuit 2 needs only one phase shifter 223 for adjusting the phase of the corresponding input signal to $2\alpha - \frac{\pi}{2}$. Besides, the input signal portion Pin can use a power divider such as a Wilkinson power divider to generate the power ratio $\frac{1}{\sqrt{2}}$ for (b1, b2), and the two switch units 211 and 221 to enable selection of one of the RF paths for the control signals in order to excite the predetermined desired CP, i.e., RHCP or LHCP, as expressed by equations (9):

$$\begin{bmatrix} b1 \\ b2 \end{bmatrix}_{RHCP} = \frac{1}{\sqrt{2}} \begin{bmatrix} 1 \\ 0 \end{bmatrix} ; \begin{bmatrix} b1 \\ b2 \end{bmatrix}_{LHCP} = \frac{1}{\sqrt{2}} \begin{bmatrix} 0 \\ 1 \end{bmatrix} \dots\dots\dots(9).$$

Given this architecture, only half of the input power is eventually delivered to the antenna element to generate radiation. In certain embodiments, the adjustable power divider circuit 2 uses the orthogonal coupler 23 to provide the output signals with a 90-degree phase difference and can switch the antenna element to a LP mode, a CP mode, or other polarization modes according to practical needs.

Referring to FIG. 2, as the adjustable power divider circuit 2 in certain embodiments allows the ON/OFF states of the two switch units 211 and 221 to be changed in order to provide the excitation power through selecting one of the RF paths, the radiation power of the antenna corresponding to the selected RF path will be only 50% of the input power if the antenna is excited to operate in a CP mode. In addition, the phase shifter 223 may produce a power loss that unbalances the power ratio between the control signals received by the input ports M1 and M2. The imbalance not only may twist a LP direction and aggravate cross polarization, but also hinders improvement of the quality of radiation polarization.

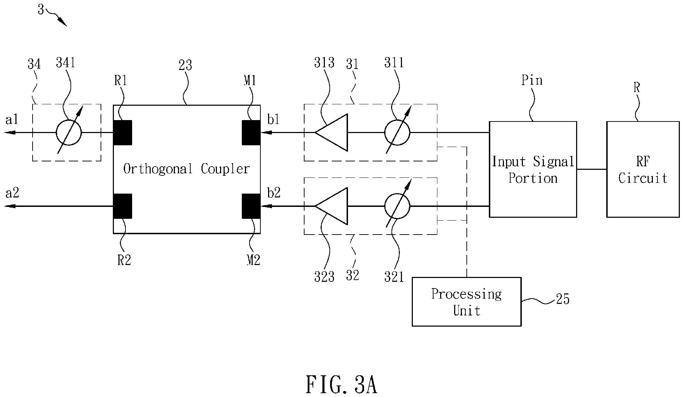

In view of the above, referring to FIG. 3A, in certain embodiments, a structure different from that of the signal control portions 21, 22 (as shown in FIG. 2) is adopted. To facilitate description and for brevity, only certain difference between said structures are described *infra,* and the elements same as or similar to those described *supra* are indicated with the same reference numerals and not repeatedly discussed. Referring to FIG. 3A, in certain embodiments, an adjustable power divider circuit 3 includes an input signal portion Pin, two signal control portions 31 and 32, an orthogonal coupler 23 (for example, a 90-degree hybrid directional coupler), a processing unit 25, and at least one signal excitation portion 34. Each of the signal control portions 31 and 32 includes a corresponding phase shifter 311 or 321, and includes a corresponding power amplifier 313 or 323. Each of the input signals transmitted by the input signal portion Pin either goes through the phase shifter 311 and the power amplifier 313 sequentially or goes through the phase shifter 321 and the power amplifier 323 sequentially to form the corresponding control signal. The phase shifter 311 is used to change the phase of the corresponding input signal to $\emptyset_1$, and the phase shifter 321 is used to change the phase of the corresponding input signal to $\emptyset_2$. The power amplifiers 313 and 323 are used to amplify the signals transmitted by the phase shifters 311 and 321, respectively, and to transmit the amplified signals to their respective input ports M1 and M2 in order for the orthogonal coupler 23 to convert each control signal into the corresponding output signal.

With continued reference to FIG. 3A, the signal excitation portion 34 is electrically connected to the output port R1 in order to receive the corresponding output signal of the orthogonal coupler 23, to perform a predetermined processing procedure (e.g., phase adjustment) on the output signal according to the processing instruction transmitted by a processing unit 25, and to transmit the processed output signal to the antenna element (e.g., a dual polarization antenna) so that the antenna element enters a predetermined polarization mode (e.g., a LP, CP, or elliptical polarization mode) according to the output signals from the signal excitation portion 34 and from the output port R2. In certain embodiments, the signal excitation portion 34 includes a phase shifter 341 (for changing the phase of the corresponding output signal to $\emptyset_{CP}$). The phase shifter 341 performs phase adjustment on the output signal from the output port R1 and transmits the phase-adjusted output signal to the antenna element. However, the specific structure and functions of the excitation portion 34 are not limited thereto.

With continued reference to FIG. 3A, the adjustable power divider circuit 3 has two RF paths (from the input signal portion Pin to the orthogonal coupler 23). One RF path is provided with the phase shifter 311 and the power amplifier 313, and the other one RF path is provided with the phase shifter 321 and the power amplifier 323. The RF paths dispense with the switch unit 211 and 221. In other words, the two RF paths of the adjustable power divider circuit 3 form a balanced structure, and because of that, the RF power generated by both signal control portions 31 and 32 (in particular the power amplifiers 313 and 323) can be used to excite the antenna element. The balanced structure also makes it possible for the control signals received by the input ports M1 and M2 to have, and to excite the orthogonal coupler 23 with, the same or similar power so as to produce substantially equal power weights, which contribute to good LP. In addition, the balanced structure enables maximized output power (as compared to certain embodiments *supra*) and allows the input signal intensity of the input signal portion Pin to be increased without causing a significant power loss or significant thermal dissipation; therefore, the highest effective isotropic radiated power (EIRP) can be achieved to help ensure high performance of the wireless communications system to which the adjustable power divider circuit 3 is applied. Given the architecture of the adjustable power divider circuit 3, the excitation weights (i.e., the output signals a1 and a2) can be expressed by equations (10) or equation (11):

$$\begin{cases} a1 = \frac{1}{\sqrt{2}}(b1 + jb2) = \frac{A}{\sqrt{2}}\left(e^{j\phi_1} + je^{j\phi_2}\right) \\ a2 = \frac{1}{\sqrt{2}}(jb1 + b2) = \frac{A}{\sqrt{2}}\left(je^{j\phi_1} + e^{j\phi_2}\right) \end{cases} \quad \ldots\ldots(10)$$

$$\begin{bmatrix} a1 \\ a2 \end{bmatrix} = \sqrt{2}Ae^{j\phi_2}e^{j\frac{\left(\Delta\phi + \frac{\pi}{2}\right)}{2}}\begin{bmatrix} \sin\left(\frac{\Delta\phi + \frac{\pi}{2}}{2}\right) \\ \cos\left(\frac{\Delta\phi + \frac{\pi}{2}}{2}\right) \end{bmatrix} \quad \ldots\ldots(11)$$

where $\Delta\phi = \phi_1 - \phi_2$. It can be known from the above that equation (11) entails not only a power ratio associated with the sine function and cosine function in equation (1), but also an additional phase item $\phi_2 + \left(\Delta\phi + \frac{\pi}{2}\right)$, which phase item is used to control the direction of the radiation beam of the antenna element. Furthermore, the total output power calculated from equation (11) is $2A^2$, which is the total power generated by the two power amplifiers 313 and 323 and will not be affected by the polarization direction.

Hence, with continued reference to FIG. 3A, the circuit architecture of the adjustable power divider circuit 3 has the following features. First, the adjustable power divider circuit 3 features equal power division. When the phase difference $\Delta\phi$ is 0, the excitation weights (i.e., the output signals a1 and a2) have a 1:1 power ratio and a phase of $\pi/4$, so equation (11) can be simplified as follows:

$$\begin{bmatrix} a1 \\ a2 \end{bmatrix} = Ae^{j\phi_2}e^{j\frac{\pi}{4}}\begin{bmatrix} 1 \\ 1 \end{bmatrix} \quad \ldots\ldots(12a).$$

With $\Delta\phi = \pm\pi$, equation (11) can be simplified as follows:

$$\begin{bmatrix} a1 \\ a2 \end{bmatrix} = Ae^{j\phi_2}e^{-j\frac{\pi}{4}}\begin{bmatrix} -1 \\ 1 \end{bmatrix} \quad \ldots\ldots(12b).$$

The above-referenced scenarios all demonstrate equal power division, with the phases being opposite, so the total output power is $2A^2$ and is equal to the input power to satisfy power conservation.

Second, it can be known from equation (11) that when the sine function or cosine function becomes 0, the signal control portions 31 and 32 simulate the functions of a switch unit. Therefore, with $\Delta\phi = -\pi/2$, equation (11) can be simplified as follows:

$$\begin{bmatrix} a1 \\ a2 \end{bmatrix} = \sqrt{2}Ae^{j\phi_2}\begin{bmatrix} 0 \\ 1 \end{bmatrix} \quad \ldots\ldots(13).$$

With $\Delta\phi = \pi/2$, equation (11) can be simplified as follows:

$$\begin{bmatrix} a1 \\ a2 \end{bmatrix} = \sqrt{2}Ae^{j\phi_2}e^{j\frac{\pi}{2}}\begin{bmatrix} 1 \\ 0 \end{bmatrix} \quad \ldots\ldots(14).$$

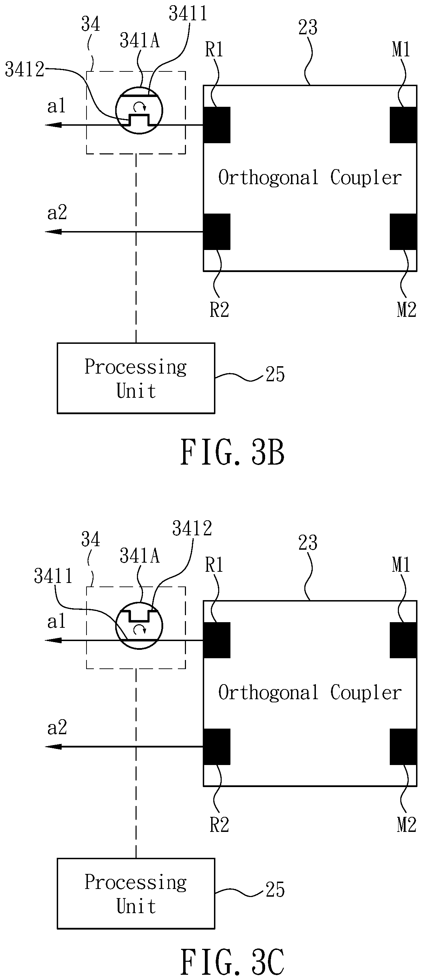

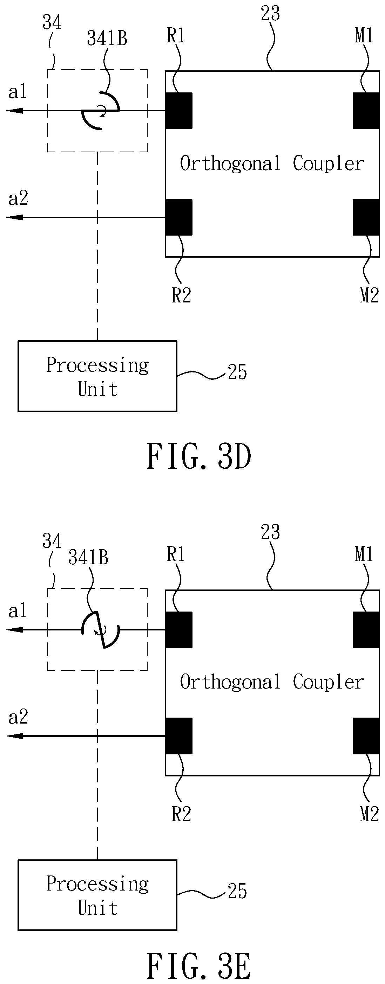

Equations (13) and (14) indicate that, with $\Delta\phi = \pm\pi/2$, a user can switch between the two RF paths, and this is equivalent to each signal control portion 31 or 32 having the function of a switch. Moreover, even if only one of the input ports M1 and M2 is selected, the phase difference of $\pi/2$ remains, and the total output power is still $2A^2$. Accordingly, the problems derived from adopting switch components in certain embodiments above can be improved. In other words, in certain embodiments, the structure of the signal control portions 21 and 22 in FIG. 2 can be replaced with the structure of the signal control portions 31 and 32 in FIG. 3 to generate the control coefficient(s) of a desired polarization mode.

With continued reference to FIG. 3A, the contents of equation (11) are applicable only to arbitrary LP modes and cannot generate CP. To meet the axial ratio and phase requirements, therefore, one of the output ports (e.g., the output port R1) is provided with the signal excitation portion 34 for adjusting the phase of the corresponding output signal, including a total of three phases (i.e., $\pm \pi/2$ and 0). When the phase of the signal excitation portion 34 is 0, the adjustable power divider circuit 3 makes the antenna element work in a LP mode. When the phase of the signal excitation portion 34 is one of $\pm \pi/2$, the adjustable power divider circuit 3 makes the antenna element work in a CP mode (e.g., a RHCP mode, with the phase being $\pi/2$, or a LHCP mode, with the phase being $-\pi/2$), and the corresponding equation is as follows:

$$\begin{bmatrix} a1 \\ a2 \end{bmatrix} = A e^{j\emptyset_2} e^{j\frac{\pi}{4}} \begin{bmatrix} e^{\pm j\frac{\pi}{2}} \\ 1 \end{bmatrix} \dots\dots\dots(15).$$

Apart from using the phase shifter 341, in certain embodiments, the signal excitation portion 34 can achieve the desired phase by way of the lengths or shapes of conductive wires. Referring to FIG. 3B and FIG. 3C, the signal excitation portion 34 includes a phase retarder 341A. The phase retarder 341A has a plurality of conductive wires 3411 and 3412 that vary in shape and length, and the processing unit 25 can bring either one of the conductive wires 3411 and 3412 into electrical connection with the output port R1 according to actual polarization needs, so as to providing a specific phase delay. Referring to FIG. 3D and FIG. 3E, in certain embodiments, the signal excitation portion 34 includes a different phase retarder 341B. While the phase retarder 341B has only one conductive wire, the processing unit 25 can change the position at which the conductive wire is connected to the output port R1, and hence the transmission path of the output signal a1, to cause a different phase delay and thereby produce the desired phase adjustment effect.

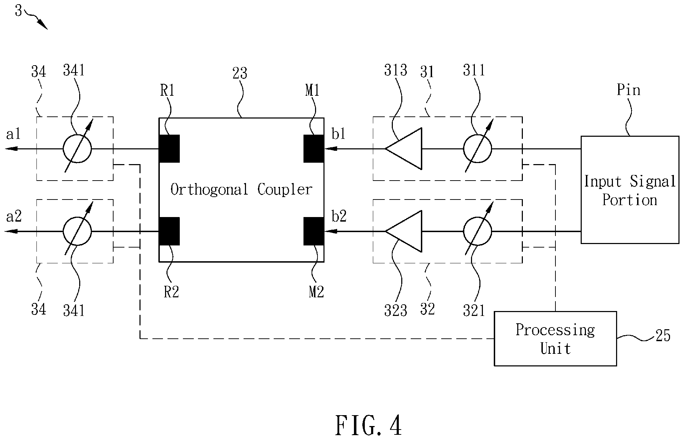

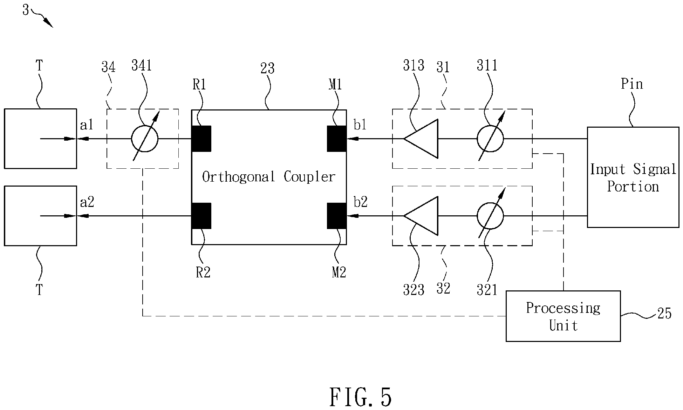

In addition, although the signal excitation portion 34 is shown in FIG. 3A as electrically connected to the output port R1, in certain embodiments, it is feasible to electrically connect the signal excitation portion 34 to the output port R2 instead, and the same effect as described above can be achieved. Referring to FIG. 4, in certain embodiments, the adjustable power divider circuit 3 can have two signal excitation portions 34 each electrically connected to one of the output ports R1 and R2, and in that case, the required phase states can be simplified to $\pi/2$ and 0. When the adjustable power divider circuit 3 is provided with two signal excitation portions 34, the two signal excitation portions 34 can produce similar power losses such that the output signals have substantially the same power level. This helps maintain a good axial ratio and prevents cross polarization attributable to uneven power division. Furthermore, when only the two phase states $\pi/2$ and 0 are used, the phase state $-\pi/2$ can be achieved with $\Delta\emptyset = \pm\pi$. By multiplying one j factor in equation (12b) by a1, the results of the second row (which corresponds to a2) of the matrix in equation (15) can be obtained to enable the desired predetermined CP (e.g., RHCP or LHCP) mode. Based on actual product needs, the adjustable power divider circuit 3 can, aside from being applied to a dual polarization antenna (such as the antenna element T in FIG. 1A), also excite two antenna elements T in the same polarization mode as shown in FIG. 5 and use the signal excitation portion(s) 34 to satisfy the phase requirement in beam formation.

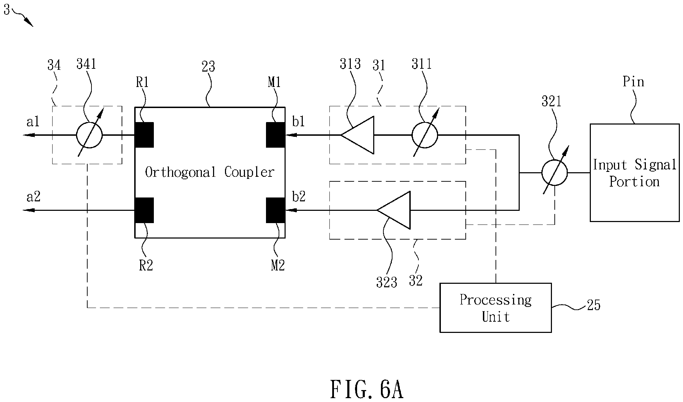

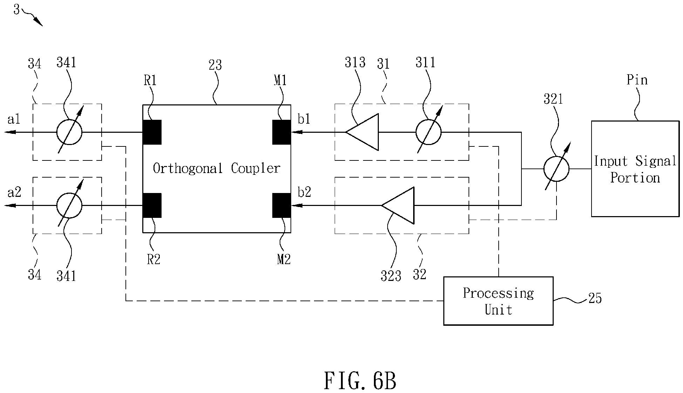

Referring to FIG. 6A and FIG. 6B, in certain embodiments, the phase shifter 321 in the adjustable power divider circuit 3 can be provided between the input signal portion Pin and the two signal control portions 31 and 32 in order to provide appropriate, even phase adjustment. This circuit architecture, however, may affect power division by the adjustable power divider circuit 3 as a whole and tends to increase power unevenness between the control signals. For example, the RF path corresponding to the signal control portion 31, which has the phase shifter 311, is subject to the power loss produced by the phase shifter 311 as well as by the phase shifter 321. Therefore, in actual use, the input signal portion Pin must be able to convert an RF signal into two input signals whose power ratio is other than 1:1 in order to address the power loss issue.

Moreover, in the adjustable power divider circuit 3 (as shown in FIG. 3A), high power consumption may take place due to the existence of the phase shifter(s) 341 (provided for polarization control) between the power amplifiers 313 and 323 and the antenna element(s). Besides, most phase shifters are designed with such electronic elements as PIN diodes or varactors and therefore have difficulty processing high-power signals, and this problem is aggravated when the power amplifier is used to provide power for a large phased array antenna configured for long-distance transmission. In the light of this, in certain embodiments, the feature of the signal control portions 31 and 32 being able to produce a $\pi/2$ phase shift (as indicated by the contents of equations (13) and (14)) is utilized so as to replace the phase shifter(s) 341.

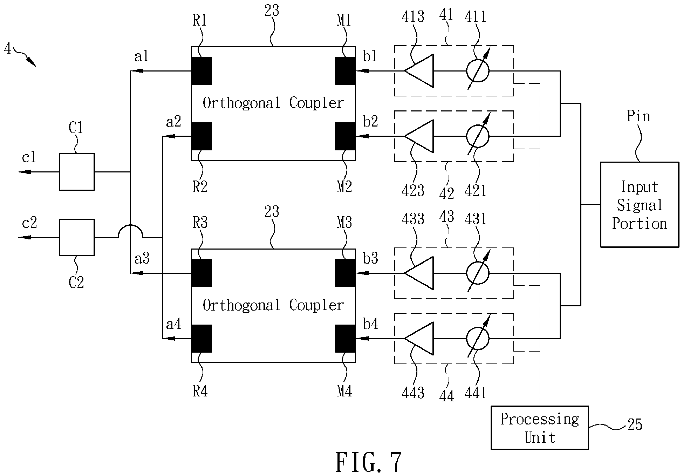

Referring to FIG. 7, in certain embodiments, an adjustable power divider circuit 4 uses two circuit architectures in certain embodiments *supra* that are configured for providing LP. The adjustable power divider circuit 4 includes an input signal portion Pin; four signal control portions 41, 42, 43, and 44; at least one processing unit 25; and two orthogonal couplers 23. The signal control portions 41, 42, 43, and 44 include phase shifters 411, 421, 431, and 441, respectively; and include power amplifiers 413, 423, 433, and 443, respectively. The input signals transmitted by the input signal portion Pin are received by the phase shifters 411, 421, 431, and 441, respectively, and are subjected to power amplification by the power amplifiers 413, 423, 433, and 443, respectively, to form corresponding control signals b1, b2, b3, and b4, which are transmitted to the output ports M1, M2, M3, and M4, respectively. The orthogonal couplers 23 convert the control signals b1, b2, b3, and b4 into output signals a1, a2, a3, and a4, respectively, and output the output signals a1, a2, a3, and a4 through the output ports R1, R2, R3, and R4, respectively. The two output ports R1 and R3 of the orthogonal couplers 23 jointly form a first output portion C1 for outputting the corresponding output signal c1 to a feed end of an antenna element; that is to say, the output ports R1 and R3 are jointly connected to the same feed end. The two output ports R2 and R4 of the orthogonal couplers 23 jointly form a second output portion C2 for outputting the corresponding output signal c2 to another feed end of the antenna element; that is to say, the output ports R2 and R4 are jointly connected to the same feed end. The foregoing configuration makes the antenna element to be capable of operating in the desired predetermined CP mode as well as the desired predetermined LP mode.

With continued reference to FIG. 7, and based on the switch unit functions expressed in equations (13) and (14), using the antenna element in the RHCP mode requires the output signals to have the same phase adjustment result (i.e., $\varnothing_{CP}$) such as that produced by a phase shifter 341 so that the adjustable power divider circuit 4 can excite the RF paths of the output ports R1 and R4 (i.e., the corresponding paths between the orthogonal couplers 23 and the antenna element) while closing the RF paths of the output ports R2 and R3, so that unnecessary signals are kept from entering the first output portion C1 and the second output portion C2. When the antenna element is to be used in the LHCP mode, the adjustable power divider circuit 4 will excite the RF paths of the output ports R2 and R3 and close the RF paths of the output ports R1 and R4. Thus, the output signals are selectively output by the output ports R1, R2, R3, and R4 to the antenna element through the first output portion C1 and the second output portion C2 to make the antenna element work in the desired predetermined RHCP or LHCP mode.

Referring again to FIG. 7, regarding the control of a CP (e.g., RHCP) mode, it is required to set the related parameters in equations (13) and (14) as $\Delta\varnothing_1 = \varnothing_1 - \varnothing_2 = \pi/2$ and $\Delta\varnothing_3 = \varnothing_3 - \varnothing_4 = -\pi/2$, and the following equations (16) and (17) are obtained as a result, with a1-a4 representing the excitation signals on the different RF paths (i.e., the output signals corresponding the output ports R1-R4), $\varnothing_1 \sim \varnothing_4$ representing the phases of the phase shifters, $\Delta\varnothing$ representing the phase difference, c1 and c2 representing the final excitation signals (i.e., the output signals from the first output portion C1 and the second output portion C2), and P representing the power of a signal:

$$\begin{bmatrix} a1 \\ a2 \end{bmatrix} = \sqrt{2}P e^{j\varnothing_2} e^{j\frac{\pi}{2}} \begin{bmatrix} 1 \\ 0 \end{bmatrix} \ \dots\dots(16)$$

$$\begin{bmatrix} a3 \\ a4 \end{bmatrix} = \sqrt{2}P e^{j\varnothing_4} \begin{bmatrix} 0 \\ 1 \end{bmatrix} \ \dots\dots(17)$$

where $\varnothing_4 = \varnothing_2$. Thus, equation (18) can be obtained as follows:

$$\begin{bmatrix} c1 \\ c2 \end{bmatrix} = \frac{1}{\sqrt{2}}\left(\begin{bmatrix} a1 \\ a2 \end{bmatrix} + \begin{bmatrix} a3 \\ a4 \end{bmatrix}\right) = P e^{j\varnothing_2} \begin{bmatrix} j \\ 1 \end{bmatrix} \ \dots\dots(18).$$

For LHCP, a similar solution can be obtained by changing the signs of $\Delta\varnothing_1$ and $\Delta\varnothing_3$. However, it can be known from the results of the foregoing equations that the output power of the adjustable power divider circuit 4 is $2P^2$, which indicates a 50% reduction from the input power.

Another solution is to use equation (11) and set $\Delta\varnothing_3 = \Delta\varnothing_1 + \pi$ such that equations (19) and (20) are obtained, with equation (21) being the target to be achieved by equation (18):

$$\begin{bmatrix} a1 \\ a2 \end{bmatrix} = \sqrt{2}Pe^{j\emptyset_2}e^{j\frac{\Delta\emptyset_1+\frac{\pi}{2}}{2}}\begin{bmatrix} \sin\left(\frac{\Delta\emptyset_1+\frac{\pi}{2}}{2}\right) \\ \cos\left(\frac{\Delta\emptyset_1+\frac{\pi}{2}}{2}\right) \end{bmatrix} \quad \text{.........(19)}$$

$$\begin{bmatrix} a3 \\ a4 \end{bmatrix} = \sqrt{2}Pe^{j\emptyset_4}e^{j\frac{\Delta\emptyset_1+\frac{\pi}{2}}{2}}\begin{bmatrix} \cos\left(\frac{\Delta\emptyset_1+\frac{\pi}{2}}{2}\right) \\ -\sin\left(\frac{\Delta\emptyset_1+\frac{\pi}{2}}{2}\right) \end{bmatrix} \quad \text{.........(20)}$$

$$\left(a1 + a3 = \pm j(a2 + a4)\right) \quad \text{.........(21)}.$$

By substituting equations (19) and (20) into equation (21), equation (22) can be obtained:

$$\sin\left(\left(\frac{\Delta\emptyset_1+\frac{\pi}{2}}{2}\right)\right) + \cos\left(\frac{\Delta\emptyset_1+\frac{\pi}{2}}{2}\right)je^{j\Delta\emptyset_{42}} = \pm j\left[\cos\left(\frac{\Delta\emptyset_1+\frac{\pi}{2}}{2}\right) - \sin\left(\frac{\Delta\emptyset_1+\frac{\pi}{2}}{2}\right)je^{j\Delta\emptyset_{42}}\right] \quad \text{......... (22)}$$

where $\Delta\emptyset_{42} = \emptyset_4 - \emptyset_2$, and the values required are $\Delta\emptyset_{42} = 0, \pi$. Therefore, equation (22) can be rewritten as equation (23):

$$\begin{bmatrix} c1 \\ c2 \end{bmatrix} = Pe^{j\emptyset_2}e^{j\frac{\Delta\emptyset_1+\frac{\pi}{2}}{2}}\begin{bmatrix} \sin\left(\frac{\Delta\emptyset_1+\frac{\pi}{2}}{2}\right) \pm j\cos\left(\frac{\Delta\emptyset_1+\frac{\pi}{2}}{2}\right) \\ \cos\left(\frac{\Delta\emptyset_1+\frac{\pi}{2}}{2}\right) \mp j\sin\left(\frac{\Delta\emptyset_1+\frac{\pi}{2}}{2}\right) \end{bmatrix} \quad \text{.........(23)}.$$

It can be known from equation (23) that by choosing an appropriate phase difference $\Delta\emptyset_1$, equations (16) to (18) can be simplified and yield $c1 = \pm jc2$ so as to excite a $2P^2$ CP mode. In addition, with continued reference to FIG. 7, an arbitrary LP mode can be controlled with equation (11) by setting the parameters as $\Delta\emptyset_1 = \Delta\emptyset_3 = \Delta\emptyset$ and $\Delta\emptyset_2 = \Delta\emptyset_4$ so that the two LP circuit architectures of the adjustable power divider circuit 4 work synchronously, which leads to equation (24):

$$\begin{bmatrix} c1 \\ c2 \end{bmatrix} = 2Pe^{j\emptyset_2}e^{j\frac{\left(\Delta\emptyset+\frac{\pi}{2}\right)}{2}}\begin{bmatrix} \sin\left(\frac{\Delta\emptyset+\frac{\pi}{2}}{2}\right) \\ \cos\left(\frac{\Delta\emptyset+\frac{\pi}{2}}{2}\right) \end{bmatrix} \quad \text{.........(24)}.$$

It can be known from the above that the total output power of the LP mode is $4P^2$.

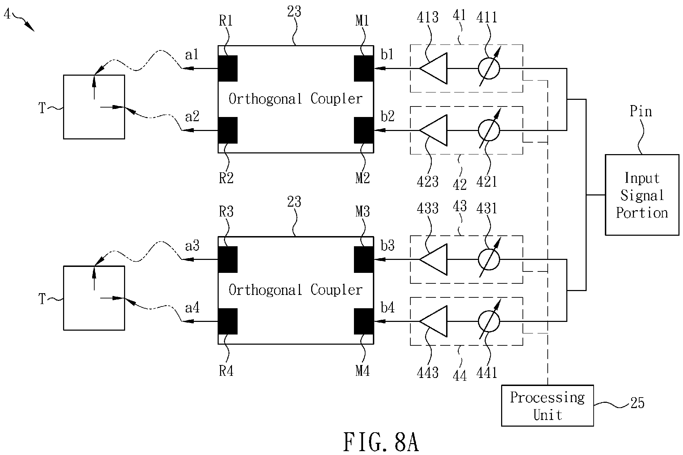

When the antenna element T is configured as two dual LP antennas, it is feasible to dispense with the first output portion and the second output portion and use only the two circuit architectures that enable linear polarization in certain embodiments *supra*. Referring to FIG. 8A, in certain embodiments, the output ports R1 and R2 of one of the orthogonal couplers 23 are electrically connected to the two feed ends of a first antenna element T, respectively, so as to transmit the output signals a1 and a2 to the first antenna element T, and the output ports R3 and R4 of the other orthogonal coupler 23 are electrically connected to the two feed ends of a second antenna element T, respectively, so as to transmit the output signals a3 and a4 to the second antenna element T. To form a LP mode in an arbitrary direction, equation (11) can be used to determine (a1, a2) and (a3, a4), and a1 = a3 and a2 = a4 can be achieved by setting $\emptyset_2 = \emptyset_4$ and $\Delta\emptyset_3 = \Delta\emptyset_1$. The radiation field of the main lobe can then be calculated with equation (25):

$$\overline{E_{net}} = a_1 E_X\hat{x} + a_2 E_y\hat{y} = 2\sqrt{2}Pe^{j\emptyset_2}e^{j\frac{\Delta\emptyset_1+\frac{\pi}{2}}{2}}\left(\sin\left(\frac{\Delta\emptyset_1+\frac{\pi}{2}}{2}\right)E_y\hat{y} + \cos\left(\frac{\Delta\emptyset_1+\frac{\pi}{2}}{2}\right)E_x\hat{x}\right)$$

$$\text{.........(25)}$$

To form a CP mode (i.e., with $E_x = E_y$ to form a rotating circular electric field), equations (19) and (20) can be used to determine the linearly polarized components $\widehat{e_1}$ and $\widehat{e_2}$ of each of the two electric field vectors to be circularly polarized, and the related equations (26a) and (26b) are as follows:

$$\widehat{e_1} = \sin\left(\frac{\Delta\emptyset_1 + \frac{\pi}{2}}{2}\right)\hat{y} + \cos\left(\frac{\Delta\emptyset_1 + \frac{\pi}{2}}{2}\right)\hat{x} \quad \text{.........(26a)}$$

$$\widehat{e_2} = \cos\left(\frac{\Delta\emptyset_1 + \frac{\pi}{2}}{2}\right)\hat{y} - \sin\left(\frac{\Delta\emptyset_1 + \frac{\pi}{2}}{2}\right)\hat{x} \quad \text{.........(26b),}$$

where $\Delta\emptyset_3 = \Delta\emptyset_1 + \pi$, and $\Delta\emptyset_{42} = \emptyset_4 - \emptyset_2 = 0, \pi$. As far as the architecture in FIG. 8A is concerned, the total radiation electric field $\overrightarrow{E_{tot}}$ can be expressed by equation (27):

$$\overrightarrow{E_{tot}} = \sqrt{2}\text{P}e^{j\emptyset_2}e^{j\frac{\Delta\emptyset_1 + \frac{\pi}{2}}{2}}E_x(\widehat{e_1} \pm j\widehat{e_2}) \quad \text{.........(27).}$$

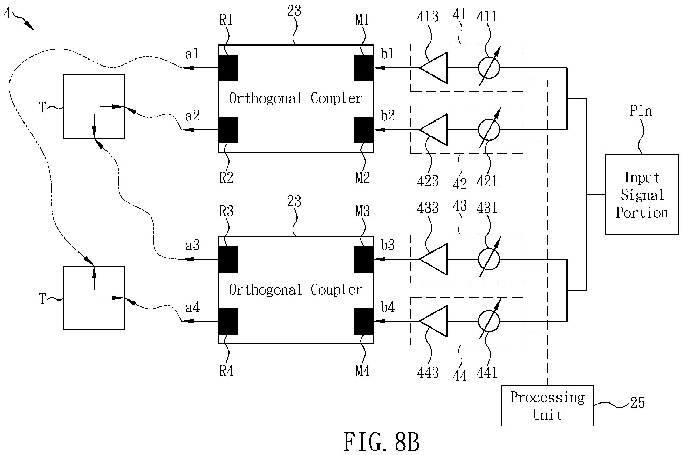

Hence, if only type of CP is maintained, the circularly polarized radiation of the other will be canceled such that the radiation power is halved, with the antenna gain reduced by 3 dB. To solve this problem, one of the two dual LP antennas can be superposed on the other to create a single antenna element with four ports, thereby preventing the power losses of two separate dual LP antennas. In addition, in certain embodiments, referring to FIG. 8B, the output ports R1, R2, R3, and R4 of the same orthogonal coupler 23 can be electrically connected to the feed ends of different antenna elements T, respectively. Taking the orthogonal coupler 23 in the upper part of FIG. 8B as an example, its two output ports R1 and R2 can be electrically connected to the feed ends of different antenna elements T, respectively; and taking the orthogonal coupler 23 in the lower part of FIG. 8B as an example, its two output ports R3 and R4 can also be electrically connected to the feed ends of different antenna elements T, respectively. In this way, according to the actual working requirements (for example, for communication with low-orbit satellites), an RF path corresponding to one of the antenna elements T can be chosen and activated, for example, output ports R1 and R4, or output ports R2 and R3, to achieve specific functional requirements.

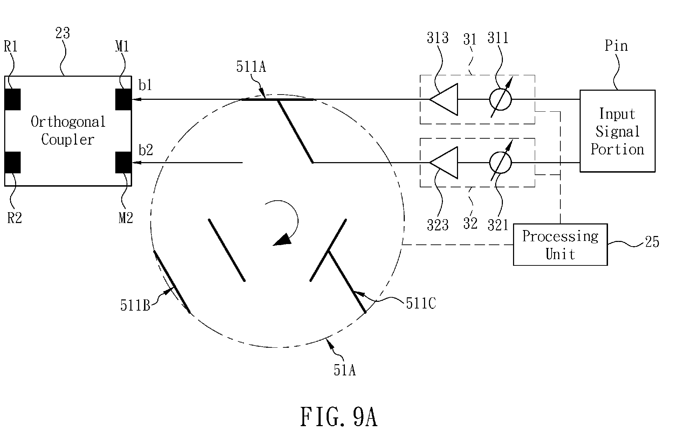

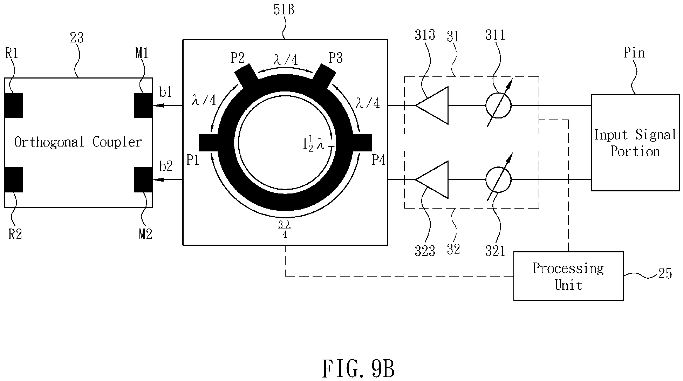

To exercise phase control or adjust the RF paths of the control signals precisely, each of the foregoing adjustable power divider circuits can be further provided with an annular adjusting device between the signal control portions and the orthogonal coupler(s). Referring to FIG. 9A, in certain embodiments, the annular adjusting device is an annular selective bridging device 51A that has a plurality of conductive wire path portions 511A, 511B, and 511C. The different conductive wire path portions 511A, 511B, and 511C make it possible to adjust the RF paths between the orthogonal coupler 23 and the two signal control portions 31 and 32. For example, the control signals of the two signal control portions 31 and 32 can both be transmitted to the input port M1 or the input port M2 alone, or are transmitted to the input ports M1 and M2, respectively. Referring to FIG. 9B, in certain embodiments, the annular adjusting device is an annular coupler 51B provided with a plurality of ports (in certain embodiments, the four ports P1, P2, P3, and P4), and the length of the conductive wire between each two adjacent ones of the ports P1-P4 is a specific fraction of the wavelength to be used. For example, and without limitation, the outer peripheral length of the conductive wire from the port P1 to the port P2 is $\lambda/4$, the outer peripheral length of the conductive wire from the port P2 to the port P3 is $\lambda/4$, the outer peripheral length of the conductive wire from the port P3 to the port P4 is $\lambda/4$, the outer peripheral length of the conductive wire from the port P4 to the port P1 is $3\lambda/4$, and the inner peripheral length of the conductive wire from the port P4 through the ports P1-P3 back to the port P4 is $1 1/2 \lambda$. The control signal of each of the signal control portions 31 and 32 can be transmitted to the input port M1 or M2 through correspond ones of the ports P1 to P4 in order to cause a specific phase delay and thereby provide the input ports M1 and M2 with a predetermined phase difference. Thus, the adjustable power divider circuits disclosed herein can be applied to various antenna architectures and conveniently form a LP mode, a CP mode, or an elliptical polarization mode as needed.

The foregoing description of the exemplary embodiments of the disclosure has been presented only for the purposes of illustration and description and is not intended to be exhaustive or to limit the disclosure to the precise forms disclosed. Many modifications and variations are possible in light of the above teaching.

The embodiments were chosen and described in order to explain the principles of the disclosure and their practical application so as to enable others skilled in the art to utilize the disclosure and various embodiments and with various modifications as are suited to the particular use contemplated. Alternative embodiments will become apparent to those skilled in the art to which the present disclosure pertains without departing from its spirit and scope.

**Claims**

1.  An adjustable power divider circuit configured to implement an arbitrary polarization mode, disposed between a radio-frequency (RF) circuit (R) and at least one antenna element (T), and comprising:

    an input signal portion (Pin) electrically connected to the RF circuit (R) and configured to convert each of at least one RF signal transmitted by the RF circuit (R) into a plurality of corresponding input signals;
    at least two signal control portions (21, 22) connected to the input signal portion (Pin) and including:

    a first signal control portion (21) configured to receive a first one of the input signals and convert the first input signal into a corresponding first control signal (b1); and
    a second signal control portion (22) configured to receive a second one of the input signals and convert the second input signal into a corresponding second control signal (b2);

    a processing unit (25) electrically connected to the signal control portions (21, 22) and configured to transmit a first processing instruction to the first signal control portion (21) and a second processing instruction to the second signal control portion (22) so that the first signal control portion (21) converts the first input signal into the corresponding first control signal (b1) according to the first processing instruction and the second signal control portion (22) converts the second input signal into the corresponding second control signal (b2) according to the second processing instruction; and
    at least one orthogonal coupler (23) including a first orthogonal coupler (23) configured to convert the first control signal (b1) into a first output signal (a1) and the second control signal (b2) into a second output signal (a2), and having:

    a first input port (M1) configured to receive the first control signal (b1) transmitted from the first signal control portion (21);
    a second input port (M2) configured to receive the second control signal (b2) transmitted from the second signal control portion (22);
    a first output port (R1) configured to output the first output signal (a1); and
    a second output port (R2) configured to output the second output signal (a2), wherein the first output signal (a1) has a 90-degree phase difference from the second output signal (a2),
    wherein the adjustable power divider circuit (2) is configured to make each of at least one antenna element (T) that is connected to the first output port (R1) or the second output port (R2) to enter a predetermined polarization mode according to the first output signal (a1) or the second output signal (a2).

2.  The adjustable power divider circuit according to claim 1, wherein the first signal control portion (21) includes a first switch unit (211), the second signal control portion (22) includes a second switch unit (221) and a phase shifter (223) disposed between the second switch unit (221) and the second input port (M2), the first switch unit (211) is configured to enter an ON or OFF state according to a processing instruction of the processing unit (25), and the second switch unit (221) is configured to enter an ON or OFF state according to a processing instruction of the processing unit (25).

3.  The adjustable power divider circuit according to claim 1, wherein the first signal control portion (31) includes a first phase shifter (311) and a first power amplifier (313) disposed between the first phase shifter (311) and the first input port (M1), and the second signal control portion (32) includes a second phase shifter (321) and a second power amplifier (323) disposed between the second phase shifter (321) and the second input port (M2).

4.  The adjustable power divider circuit according to claim 1, wherein the first signal control portion (31) includes a first phase shifter (311) and a first power amplifier (313) disposed between the first phase shifter (311) and the first input port (M1), the second signal control portion (32) includes a second power amplifier (323), and a second phase shifter (321) is disposed between the input signal portion (Pin) and the first and second signal control portions (31, 32).

5.  The adjustable power divider circuit according to claim 3 or 4, further comprising at least one signal excitation portion (34), wherein the signal excitation portion (34) is electrically connected to at least one of the first and second output ports (R1, R2) and configured to receive at least one of the first and second output signals (a1, a2).

6.  The adjustable power divider circuit according to claim 5, wherein the adjustable power divider circuit (3) has only one signal excitation portion (34) configured to adjust a phase of the first output signal (a1) or the second output signal (a2)

to be $+\pi/2$, $-\pi/2$, or 0.

7. The adjustable power divider circuit according to claim 5, wherein the adjustable power divider circuit (3) has a first signal excitation portion (34) electrically connected to the first output port (R1) and configured to adjust a phase of the first output signal (a1) to be $\pi/2$ or 0, and a second signal excitation portion (34) electrically connected to the second output port (R2) and configured to adjust a phase of the second output signal (a2) to be $\pi/2$ or 0.

8. The adjustable power divider circuit according to claim 5, wherein the signal excitation portion (34) includes a phase retarder (341A) having a plurality of conductive wires (3411, 3412) varying in shape and length, wherein the phase retarder (341A) is configured to receive a processing instruction from the processing unit (25), bring one of the conductive wires (3411, 3412) into electrical connection with a corresponding one of the first and second output ports (R1, R2) according to the processing instruction, and adjust a phase of a corresponding one of the first and second output signals (a1, a2) that passes through the phase retarder (341A).

9. The adjustable power divider circuit according to claim 5, wherein the signal excitation portion (34) includes a phase retarder (341B) having a conductive wire (3411), wherein the phase retarder (341B) is configured to receive a processing instruction from the processing unit (25), change a position at which the conductive wire (3411) is connected to a corresponding one of the first and second output ports (R1, R2) according to the processing instruction so as to change a path length between the corresponding output port (R1, R2) and an antenna element (T) corresponding to the output port (R1, R2), and adjust a phase of a corresponding one of the first and second output signals (a1, a2) that passes through the phase retarder (341B) according to the path length change.

10. The adjustable power divider circuit according to claim 1, further comprising a third signal control portion (43), a fourth signal control portion (44), and a second orthogonal coupler (23) having a first input port (M3), a second input port (M4), a first output port (R3) and a second output port (R4); the third signal control portion (43) is electrically connected to the first input port (M3) of the second orthogonal coupler (23), and the fourth signal control portion (44) is electrically connected to the second input port (M4) of the second orthogonal coupler (23); one of the first and second output ports (R1, R2) of the first orthogonal coupler (23) and one of the first and second output ports (R3, R4) of the second orthogonal coupler (23) jointly form a first output portion (C1), and the other one of the first and second output ports (R1, R2) of the first orthogonal coupler (23) and the other one of the first and second output ports (R3, R4) of the second orthogonal coupler (23) jointly form a second output portion (C2); and the adjustable power divider circuit (4) is configured to make a first antenna element (T) connected to the first output portion (C1) to enter a first predetermined polarization mode according to at least one of one of the first and second output signals (a1, a2) of the first orthogonal coupler (23) and one of a first output signal (a3) and a second output signal (a4) of the second orthogonal coupler (23) that is transmitted to the first antenna element (T), and to make a second antenna element (T) connected to the second output portion (C2) to enter a second predetermined polarization mode according to at least one of the other one of the first and second output signals (a1, a2) of the first orthogonal coupler (23) and the other one of the first and second output signals (a3, a4) of the second orthogonal coupler (23) that is transmitted to the second antenna element (T).

11. The adjustable power divider circuit according to claim 1, further comprising a third signal control portion (43), a fourth signal control portion (44), and a second orthogonal coupler (23) having a first input port (M3), a second input port (M4), a first output port (R3) and a second output port (R4); the third signal control portion (43) is electrically connected to the first input port (M3) of the second orthogonal coupler (23), and the fourth signal control portion (44) is electrically connected to the second input port (M4) of the second orthogonal coupler (23); the first and second output ports (R1, R2) of the first orthogonal coupler (23) are electrically connected to two feed ends of a first dual polarization antenna, respectively, and the first and second output ports (R3, R4) of the second orthogonal coupler (23) are electrically connected to two feed ends of a second dual polarization antenna, respectively; and the adjustable power divider circuit (4) is configured to make the first dual polarization antenna to enter a first predetermined polarization mode according to at least one of the first and second output signals (a1, a2) of the first orthogonal coupler (23) that is transmitted to the first dual polarization antenna, and to make the second dual polarization antenna to enter a second predetermined polarization mode according to at least one of a first output signal (a3) and a second output signal (a4) of the second orthogonal coupler (23) that is transmitted to the second dual polarization antenna.

12. The adjustable power divider circuit according to claim 1, further comprising a third signal control portion (43), a fourth signal control portion (44), and a second orthogonal coupler (23) having a first input port (M3), a second input port (M4), a first output port (R3) and a second output port (R4); the third signal control portion (43) is electrically connected to the first input port (M3) of the second orthogonal coupler (23), and the fourth signal control portion (44) is electrically connected to the second input port (M4) of the second orthogonal coupler (23); the first output ports (R1, R3) and second output ports (R2, R4) of the first and second orthogonal couplers (23) are electrically connected to four feed ends of the sane antenna element (T), respectively; and the adjustable power divider circuit (4) is configured to make the antenna element (T) to enter a predetermined polarization mode according to at least one of the first and second output signals (a1, a2) of the first orthogonal coupler (23) and a first output signal (a3) and a second output signal (a4) of the second orthogonal coupler (23) that is transmitted to the antenna element (T).

13. The adjustable power divider circuit according to claim 1, further comprising an annular adjusting device disposed between the signal control portions (31, 32) and the at least one orthogonal coupler (23), wherein the annular adjusting device is configured to adjust RF transmission paths of the control signals (b1, b2) or cause a phase delay.

14. The adjustable power divider circuit according to claim 13, wherein the annular adjusting device is an annular selective bridging device (51A) having a plurality of conductive wire path portions (511A, 511B, 511C), and each of the conductive wire path portions (511A, 511B, 511C) forms a different RF path between the signal control portions (31, 32) and the at least one orthogonal coupler (23).

15. The adjustable power divider circuit according to claim 13, wherein the annular adjusting device is an annular coupler (51B) having a plurality of ports (P1, P2, P3, P4) and configured to transmit the control signals (b1, b2) from one of the ports (P1, P2, P3, P4) to another one of the ports (P1, P2, P3, P4) and from the another one of the ports (P1, P2, P3, P4) to a corresponding input port (M1, M2) of the at least one orthogonal coupler (23) to cause a phase delay in at least one of the control signals (b1, b2).

FIG. 1A

FIG. 1B

FIG. 2

FIG. 3A

FIG. 3B

FIG. 3C

34
341B
a1
a2
R1
23
M1

Orthogonal Coupler

R2
M2

Processing Unit
25

FIG. 3D

34
341B
a1
a2
R1
23
M1

Orthogonal Coupler

R2
M2

Processing Unit
25

FIG. 3E

FIG. 4

FIG. 5

FIG. 6A

FIG. 6B

FIG. 7

FIG. 8A

FIG. 8B

R1    23    M1        313  31  311          Pin

Orthogonal
Coupler

b1

b2

R2    M2

511A

511B

511C

51A

Input
Signal
Portion

323  32  321

Processing
Unit        25

FIG. 9A

FIG. 9B

# EUROPEAN SEARCH REPORT

Application Number

EP 24 22 3640

Europäisches Patentamt
European Patent Office
Office européen des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 501 156 B1 (BOEING CO [US]) 4 April 2007 (2007-04-04) | 1-3,5-7 | INV. H01P5/18 |
| A | * paragraph [0017] - paragraph [0022]; figure 2 * * paragraph [0048] - paragraph [0051]; figure 7 * * paragraph [0062] - paragraph [0065]; figures 8-10 * | 4,8-15 | |
| A | EP 2 738 870 B1 (VIASAT INC [US]) 2 June 2021 (2021-06-02) * paragraph [0006] - paragraph [0007] * * paragraph [0040] - paragraph [0055]; figures 4-6 * * paragraph [0072]; figure 7 * | 1-15 | |
| A | US 2021/194122 A1 (AKIMOTO SHIMPEI [JP] ET AL) 24 June 2021 (2021-06-24) * paragraph [0048] - paragraph [0080]; figures 1,2 * | 1-15 | |

| | |
|---|---|
| **TECHNICAL FIELDS SEARCHED (IPC)** | |
| H01P | |

The present search report has been drawn up for all claims

| Place of search | Date of completion of the search | Examiner |
|---|---|---|
| The Hague | 16 June 2025 | Pastor Jiménez, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 22 3640

This annex lists the patent family members relating to the patent documents cited in the above-mentioned European search report.
The members are as contained in the European Patent Office EDP file on
The European Patent Office is in no way liable for these particulars which are merely given for the purpose of information.

16-06-2025

| Patent document cited in search report | | Publication date | Patent family member(s) | | Publication date |
|---|---|---|---|---|---|
| EP 1501156 | B1 | 04-04-2007 | CA | 2469516 A1 | 23-01-2005 |
| | | | CN | 1577969 A | 09-02-2005 |
| | | | DE | 602004005635 T2 | 13-12-2007 |
| | | | EP | 1501156 A1 | 26-01-2005 |
| | | | JP | 4528567 B2 | 18-08-2010 |
| | | | JP | 2005045790 A | 17-02-2005 |
| | | | KR | 20050011682 A | 29-01-2005 |
| | | | TW | I338413 B | 01-03-2011 |
| | | | US | 2005017897 A1 | 27-01-2005 |
| EP 2738870 | B1 | 02-06-2021 | EP | 2738870 A2 | 04-06-2014 |
| | | | EP | 3787110 A1 | 03-03-2021 |
| | | | EP | 4498524 A2 | 29-01-2025 |
| US 2021194122 | A1 | 24-06-2021 | CN | 111712969 A | 25-09-2020 |
| | | | EP | 3742551 A1 | 25-11-2020 |
| | | | JP | 6698970 B2 | 27-05-2020 |
| | | | JP | WO2019163061 A1 | 28-05-2020 |
| | | | TW | 201937809 A | 16-09-2019 |
| | | | US | 2021194122 A1 | 24-06-2021 |
| | | | WO | 2019163061 A1 | 29-08-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- TW 113103380